# EUROPEAN PATENT APPLICATION

(11) **EP 3 713 267 A1**
(43) Date of publication of application: **23.09.2020**
(21) Application number: 19163739.6
(22) Date of filing: 19.03.2019
(51) Int. Cl.: H04W 12/00, G06F 8/60, H04W 12/10

(54) **COMMUNICATION DEVICE AND EDGE SERVER FOR COMMUNICATION NETWORK**

(71) Applicant: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(57) **Abstract**

The invention relates to a wireless communication device (120) for a communication network (100), wherein the communication network (100) is configured to provide one or more communication services to the wireless communication device (120) and comprises at least one edge server (140) having a low latency communication connection with the wireless communication device (120). The wireless communication device (120) comprises: a memory (123) configured to store executable program code; a processor (121) configured to execute the program code; and a communication interface (125) configured to send a request for an integrity check of the program code via the low latency communication connection to the edge server (140). The processor (121) is configured to execute the program code, once the edge server (140) has indicated that the integrity of the program code has been verified by the edge server (140). Moreover, the invention relates to a correspondingly configured edge server (140) and a communication network (100).

## Description

### TECHNICAL FIELD

In general, the invention relates to communication networks. More specifically, the invention relates to a wireless communication device and an edge server for a communication network, in particular a 5G wireless communication network.

### BACKGROUND

Edge computing is a method of optimizing network computing systems by taking the computing resources, applications, data, and services often provided by edge servers away from central network nodes, i.e. the core network, to the edge of the network. In this architecture, data often comes in from the physical world via various sensors, and actions are taken to change physical state via various forms of output and actuators. By performing analytics and knowledge generation at the edge, communications bandwidth between systems under control and the core network can be reduced. Thus, edge computing takes advantage of proximity to the physical items of interest also exploiting relationships those items may have to each other.

The close proximity of an edge server to wireless communication devices, such as user equipments, mobile terminals and loT devices, allows reducing the latency of the roundtrip time (RTT) between the communication end nodes and an edge server. Generally, the closer an edge server is located to an access point of the radio access network, such as a multi-service access node (MSAN), the smaller the latency between the wireless communication devices and the edge server.

Generally, a wireless communication device is configured to run application software in the form of one or more "apps". Often these apps are not initially implemented on the wireless communication device, but the corresponding program code is downloaded via the wireless communication network, for instance, from an app server. For securing wireless communication devices against malware, it is known to provide security environments on wireless communication devices for performing a run-time check of the integrity of a program code, which, for instance, has been downloaded via the wireless communication network. Providing such a security environment, which can be implemented in hardware and/or in software, and performing a run-time check of the integrity of a program code consumes software and hardware resources of the wireless communication device.

Thus, there is a need for improved devices, methods and systems allowing running secure applications on wireless communication devices in wireless communication networks.

### SUMMARY OF THE INVENTION

It is an object of the invention to provide improved devices, methods and systems allowing running secure applications on wireless communication devices in wireless communication networks.

The foregoing and other objects are achieved by the subject matter of the independent claims. Further implementation forms are apparent from the dependent claims, the description and the figures.

According to a first aspect the invention relates to a wireless communication device for a communication network, wherein the communication network is configured to provide one or more communication services to the wireless communication device and comprises at least one edge server having a low latency communication connection with the wireless communication device. The wireless communication device comprises: a memory configured to store a program code; a processor configured to execute the program code; and a communication interface configured to send a request for an integrity check of the program code via the low latency communication connection to the edge server. The processor is configured to execute the program code, once the edge server has indicated the integrity of the program code.

Thus, an improved wireless communication device is provided allowing running secure applications thereon. More specifically, it is no longer necessary to provide, maintain and trust a security environment, which performs the program code integrity check on the wireless communication device. This is advantageous, because it is often difficult to remotely manage the local security environment provided on a wireless communication device, which, moreover, is less resistant against external attacks. An edge server provides on the one hand more computational resources and on the other hand can be better managed and protected against external attacks.

According to an embodiment of the first aspect the request includes a program code identifier, wherein the program code identifier allows the edge server to identify the program code to be executed by the processor, once it has been verified by the edge server.

According to a further embodiment of the first aspect the processor is configured to generate a program code digest by applying a hash function or a message authentication code to the program code, wherein the request includes the program code digest.

According to a further embodiment of the first aspect the request itself can include the program code.

According to a second aspect the invention relates to an edge server for a communication network, wherein the communication network is configured to provide one or more communication services to a wireless communication device having a low latency communication connection with the edge server. The edge server comprises: a communication interface configured to receive a request for an integrity check of a program code to be executed by the wireless communication device via the low latency communication connection from the wireless communication device; and a processor configured to check the integrity of the program code to be executed by the wireless communication device. The communication interface is further configured to send a message via the low latency communication connection to the wireless communication device indicating the integrity of the program code.

According to an embodiment of the second aspect the request includes a program code identifier, wherein the processor is configured to identify the program code to be executed by the wireless communication device and to be verified by the processor of the edge server on the basis of the program code identifier.

According to an embodiment of the second aspect the request includes the program code to be executed by the wireless communication device and to be verified by the processor of the edge server. In other words, according to an embodiment the processor of the edge server is configured to extract the program code from the request.

According to an embodiment of the second aspect the request includes a program code digest, wherein the processor of the edge server is configured to generate a further program code digest by applying a hash function or a message authentication code to the program code to be executed by the wireless communication device and to verify the integrity of the program code to be executed by the wireless communication device by comparing the program code digest provided by the wireless communication device with the further program code digest.

According to an embodiment of the second aspect the processor of the edge server is configured to perform further security checks of the request, in particular to perform an antivirus check of the request.

According to a third aspect the invention relates to a wireless communication network comprising: a wireless communication device according to the first aspect; and an edge server according to the second aspect, wherein the wireless communication device is connected via a low latency communication connection with the edge server.

According to a fourth aspect the invention relates to a method of performing a program code integrity check in a communication network having a wireless communication device and an edge server, wherein the wireless communication device is connected via a low latency communication connection with the edge server. The method comprises the steps of:
sending from the wireless communication device a request for an integrity check of a program code to be executed by the wireless communication device via the low latency communication connection to the edge server;
verifying the integrity of the program code to be executed by the wireless communication device by the edge server; and
sending from the edge server via the low latency communication connection to the wireless communication device a message that the integrity of the program code to be executed by the wireless communication device has been successfully verified.

According to an embodiment of the fourth aspect the request includes a program code identifier, wherein the method comprises the further step of identifying the program code to be executed by the wireless communication device on the basis of the program code identifier by the edge server.

According to an embodiment of the fourth aspect the method comprises the further step of generating a program code digest by the wireless communication device by applying a hash function or a message authentication code to the program code, wherein the request includes the program code digest, and wherein the method comprises the further step of generating a further program code digest by the edge server by applying a hash function or a message authentication code to the program code to be executed by the wireless communication device.

According to an embodiment of the fourth aspect the step of verifying the integrity of the program code to be executed by the wireless communication device by the edge server comprises the step of comparing the program code digest provided by the wireless communication device with the further program code digest generated by the edge server.

According to a fifth aspect the invention relates to a computer program product comprising program code for performing the method according to the fourth aspect of the invention, when executed on a computer or a processor.

Embodiments of the invention are applicable for communication devices that use wireless communication technology, such as Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G system.

In embodiments of the present invention communication devices may be capable of communicating content, data, information and/or signals via a wireless medium or channel. In some embodiments, the wireless medium may include, for example, a radio channel, a cellular channel, an RF channel, a WiFi channel, an IR channel, a Bluetooth (BT) channel, a Global Navigation Satellite System (GNSS) channel, and the like.

In embodiments of the present invention communication devices may include one or more radio modules (or short radios) including circuitry and/or logic to perform wireless communication between the communication devices. In embodiments of the present invention the radio modules may include one or more wireless receivers (Rx) including circuitry and/or logic to receive wireless communication signals, RF signals, frames, blocks, transmission streams, packets, messages, data items, and/or data. In embodiments of the present invention the radio modules may include one or more wireless transmitters (Tx) including circuitry and/or logic to transmit wireless communication signals, RF signals, frames, blocks, transmission streams, packets, messages, data items, and/or data. In embodiments of the present invention, the radio modules may include Radio Frequency (RF) elements, baseband elements, modulation elements, demodulation elements, amplifiers, analog to digital and/or digital to analog converters, filters and the like, which can be implemented in hardware and/or software.

In embodiments of the present invention the radio modules may be configured to communicate according to an OFDM scheme and/or an FDMA scheme in an uplink direction and/or a downlink direction. In other embodiments, the radios of the communication devices may be configured to communicate according to any other additional or alternative modulation scheme. In embodiments of the present invention, the radios may include, or may be associated with, one or more antennas. In one example, a communication device may include a single antenna. In another example, a communication device may include two or more antennas. Such antennas may include any type of antennas suitable for transmitting and/or receiving wireless communication signals, blocks, frames, transmission streams, packets, messages and/or data. The antennas may include, for example, antennas suitable for directional communication, e.g., using beamforming techniques. For example, the antennas may include a phased array antenna, a multiple element antenna, a set of switched beam antennas, and/or the like. In some embodiments, the antennas may implement transmit and receive functionalities using separate transmit and receive antenna elements. In some embodiments, the antennas may implement transmit and receive functionalities using common and/or integrated transmit/receive elements.

In embodiments of the present invention the processor of the communication device may be configured to perform and/or to trigger, cause, instruct and/or control the communication device to perform, one or more communications, to generate and/or communicate one or more messages and/or transmissions, and/or to perform one or more functionalities, operations and/or procedures. In embodiments of the present invention the processor may include circuitry and/or logic, Media-Access Control (MAC) circuitry and/or logic, Physical Layer (PHY) circuitry and/or logic, and/or any other circuitry and/or logic, configured to perform the functionality of the processor.

In embodiments of the present invention, at least part of the functionality of the processor may be implemented by an integrated circuit, for example, a chip, e.g., a System on Chip (SoC). In one example, the chip or SoC may be configured to perform one or more functionalities of the radio as well. For example, the chip or SoC may include one or more elements of the processor and/or one or more elements of the radio. In one example, the processor and the radio may be implemented as part of the chip or SoC.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic block diagram illustrating a wireless communication network comprising a communication system with a communication device and an edge server according to an embodiment; and
Fig. 2 shows a flow diagram illustrating steps of performing a program code integrity check according to an embodiment.

In the various figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

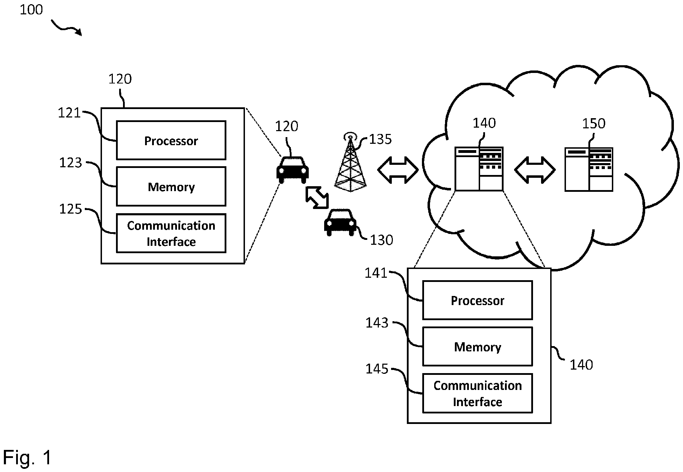

Figure 1 shows a schematic diagram of a wireless or cellular communication network 100. The cellular communication network 100 can be, for instance, a 3G, 4G or 5G cellular communication network 100. The cellular communication network 100 can comprise a radio access network, a core network and a plurality of wireless communication devices 120, 130. In the exemplary embodiment shown in figure 1, the plurality of wireless communication devices 120, 130 are smart vehicles, in particular the communication modules thereof. As will be appreciated, however, the wireless communication devices 120, 130 could be implemented as other types of wireless communication devices as well, such as mobile terminals, user equipments or any other type of mobile or stationary wireless communication devices configured for wireless communication in the cellular communication network 100.

For the sake of clarity figure 1 shows only a single exemplary base station 135, which constitutes part of the radio access network of the wireless communication network 100. In other embodiments the radio access network of the wireless communication network 100 comprises a plurality of base stations similar to the exemplary base station 135 shown in figure 1.

The core network of the wireless communication network 100 comprises entities or functions for operating the wireless communication network 100. In the exemplary embodiment shown in figure 1 the core network of the wireless communication network 100 comprises, for instance, an authentication entity 150 configured to perform an authentication procedure with each of the wireless communication devices 120, 130 before granting full access to the communication network 100.

The wireless communication network 100 provides edge computing resources. For the sake of clarity figure 1 shows only a single exemplary edge server 140 providing such edge computing resources. In other embodiments the wireless communication network 100 comprises a plurality of edge servers similar to the exemplary edge server 140 shown in figure 1 for providing edge computing resources. The edge server 140 is located in close proximity to the base station 135 for providing, in particular, a low latency communication connection having a small latency of the roundtrip time (RTT) between the edge server 140 and the plurality of wireless communication devices 120, 130.

As can be taken from the more detailed view shown in figure 1, the wireless communication device 120 comprises a memory 123 configured to store a program code defining, for instance, an application software, i.e. an "app". This program code could have been initially stored on the memory 123 during the manufacturing of the wireless communication device or downloaded over-the-air.

Moreover, the wireless communication device 120 comprises a processor 121 configured to execute the program code stored in the memory 123 and a communication interface 125 configured to send a request for an integrity check of the program code via the low latency communication connection to the edge server 140. The processor 121 is configured to execute the program code only, once the edge server 140 has indicated the integrity of the program code, i.e. has successfully verified the integrity of the program code.

As can be taken from the more detailed view shown in figure 1 as well, the edge server 140 comprises a communication interface 145 configured to receive the request for the integrity check of the program code to be executed by the wireless communication device 120 via the low latency communication connection from the wireless communication device 120. Moreover, the edge server 140 comprises a processor 141 configured to check the integrity of the program code to be executed by the wireless communication device 120. The communication interface 145 of the edge server 140 is further configured to send a message via the low latency communication connection to the wireless communication device 120 indicating the integrity of the program code, i.e. the successful verification of the integrity of the program code. If the processor 141 of the edge server 140 arrives at the result that the program code to be executed by the wireless communication device 120 is not integer, for instance, corrupted, then according to an embodiment the communication interface 145 of the edge server 140 is configured to send a corresponding message to the wireless communication device 120. In response thereto, the wireless communication device 120 will not execute the possibly corrupted program code.

According to an embodiment, the request sent by the wireless communication device 120 includes a program code identifier, wherein the program code identifier allows the edge server 140 to identify the program code to be verified by the edge server 140 and to be executed by the wireless communication device 120. Different program codes associated with different program code identifiers could be stored, for instance, in a memory or data base 143 of the edge server 140. According to a further embodiment, the processor 121 of the wireless communication device 120 is configured to generate a program code digest by applying a hash function or a message authentication code to the program code. In this case the request can include the program code identifier and the program code digest. In this embodiment, the processor 141 of the edge server 140 is configured to generate a further program code digest by applying a hash function or a message authentication code to the program code to be executed by the wireless communication device 120 and to verify the integrity of the program code to be executed by the wireless communication device 120 by comparing the program code digest provided by the wireless communication device 120 with the further program code digest.

According to a further embodiment, the request can include the program code. In this embodiment, the processor 141 of the edge server 140 is configured to extract the program code from the request.

According to a further embodiment, the processor 141 of the edge server 140 is configured to perform further security checks of the request, in particular to perform an antivirus check of the request.

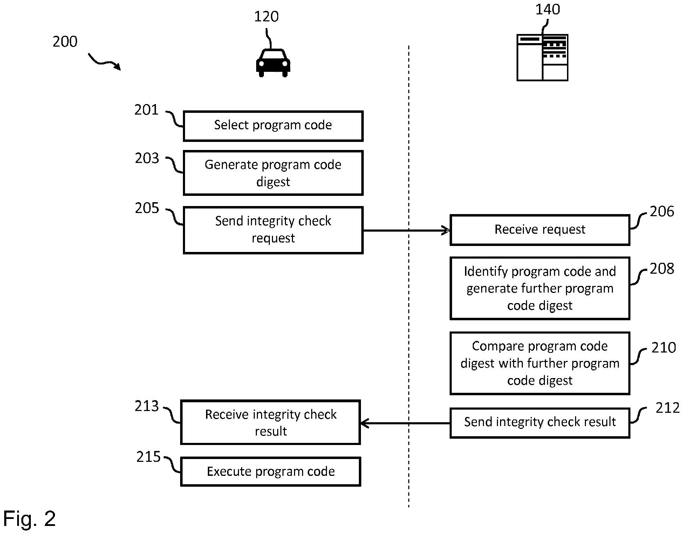

Figure 2 shows a flow diagram illustrating steps of a corresponding method 200 of performing a program code integrity check in the communication network 100. After selecting 201 a program code to be executed the wireless communication device 120 sends a request for an integrity check of the selected program code via a low latency communication connection to the edge server 140. This request is received 206 by the edge server 140, which in a step 210 verifies the integrity of the program code to be executed by the wireless communication device 120. In response to a successful check of the integrity of the selected program code, the edge server 140 sends 212 via the low latency communication connection to the wireless communication device 120 a message that the integrity of the selected program code to be executed by the wireless communication device 120 has been successfully verified. Having received 213 the positive result of the integrity check, the processor 121 of the wireless communication device 120 will start executing 215 the verified program code.

As already described above, according to an embodiment the request can include a program code identifier, wherein the method 200 comprises the further step of identifying 208 the program code to be executed by the wireless communication device 120 on the basis of the program code identifier by the edge server 140.

According to an embodiment the method 200 comprises the further step of generating 203 a program code digest by the wireless communication device 120 by applying a hash function or a message authentication code to the program code, wherein the request includes the program code digest, and wherein the method 200 comprises the further step of generating 208 a further program code digest by the edge server 140 by applying a hash function or a message authentication code to the program code to be executed by the wireless communication device 120.

According to an embodiment the step of verifying 210 the integrity of the program code to be executed by the wireless communication device 120 by the edge server 140 comprises the step of comparing 210 the program code digest provided by the wireless communication device 120 with the further program code digest generated by the edge server 140.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A wireless communication device (120) for a communication network (100), wherein the communication network (100) is configured to provide one or more communication services to the wireless communication device (120) and comprises at least one edge server (140) having a low latency communication connection with the wireless communication device (120), wherein the wireless communication device (120) comprises:
a memory (123) configured to store a program code;
a processor (121) configured to execute the program code; and
a communication interface (125) configured to send a request for an integrity check of the program code via the low latency communication connection to the edge server (140),
wherein the processor (121) is configured to execute the program code, once the edge server (140) has indicated the integrity of the program code.

2. The wireless communication device (120) of claim 1, wherein the request includes a program code identifier, wherein the program code identifier allows the edge server (140) to identify the program code to be executed by the processor (121).

3. The wireless communication device (120) of claim 1 or 2, wherein the processor (121) is configured to generate a program code digest by applying a hash function or a message authentication code to the program code and wherein the request includes the program code digest.

4. The wireless communication device (120) of any one of the preceding claims, wherein the request includes the program code.

5. An edge server (140) for a communication network (100), wherein the communication network (100) is configured to provide one or more communication services to a wireless communication device (120) having a low latency communication connection with the edge server (140), wherein the edge server (140) comprises:
a communication interface (145) configured to receive a request for an integrity check of a program code to be executed by the wireless communication device (120) via the low latency communication connection from the wireless communication device (120); and
a processor (141) configured to check the integrity of the program code to be executed by the wireless communication device (120);
wherein the communication interface (145) is further configured to send a message via the low latency communication connection to the wireless communication device (120) indicating the integrity of the program code.

6. The edge server (140) of claim 5, wherein the request includes a program code identifier, wherein the processor (141) is configured to identify the program code to be executed by the wireless communication device (120) on the basis of the program code identifier.

7. The edge server (140) of claim 5, wherein the request includes the program code to be executed by the wireless communication device (120).

8. The edge server (140) of claim 5 or 6, wherein the request includes a program code digest, wherein the processor (141) is configured to generate a further program code digest by applying a hash function or a message authentication code to the program code to be executed by the wireless communication device (120) and to verify the integrity of the program code to be executed by the wireless communication device (120) by comparing the program code digest provided by the wireless communication device (120) with the further program code digest.

9. The edge server (140) of any one of claims 5 to 8, wherein the processor (141) is configured to perform further security checks of the request, in particular to perform an antivirus check of the request.

10. A communication network (100) comprising:
a wireless communication device (120) according to any one of claims 1 to 4; and
an edge server (140) according to any one of claims 5 to 9,
wherein the wireless communication device (120) is connected via a low latency communication connection with the edge server (140).

11. A method (200) of performing a program code integrity check in a communication network (100) having a wireless communication device (120) and an edge server (140), wherein the wireless communication device (120) is connected via a low latency communication connection with the edge server (140), wherein the method (200) comprises:
sending (205) from the wireless communication device (120) a request for an integrity check of a program code to be executed by the wireless communication device (120) via the low latency communication connection to the edge server (140);
verifying (210) the integrity of the program code to be executed by the wireless communication device (120) by the edge server (140); and
sending (212) from the edge server (140) via the low latency communication connection to the wireless communication device (120) a message that the integrity of the program code to be executed by the wireless communication device has been verified.

12. The method (200) of claim 11, wherein the request includes a program code identifier and wherein the method (200) comprises the further step of identifying (208) the program code to be executed by the wireless communication device (120) on the basis of the program code identifier by the edge server (140).

13. The method (200) of claim 11 or 12, wherein the method (200) comprises the further step of generating (203) a program code digest by the wireless communication device (120) by applying a hash function or a message authentication code to the program code, wherein the request includes the program code digest, and wherein the method (200) comprises the further step of generating (208) a further program code digest by the edge server (140) by applying a hash function or a message authentication code to the program code to be executed by the wireless communication device (120).

14. The method of claim 13, wherein the step of verifying (210) the integrity of the program code to be executed by the wireless communication device (120) by the edge server (140) comprises the step of comparing (210) the program code digest provided by the wireless communication device (120) with the further program code digest generated by the edge server (140).

15. A computer program product comprising program code for performing the method (200) of any one of claims 11 to 14, when executed on a computer or a processor.
